# FASCICULE DE BREVET EUROPEEN

(11) **EP 2 619 493 B1**
(45) Date de publication et mention de la délivrance du brevet: **20.01.2016**
(21) Numéro de dépôt: 11758235.3
(22) Date de dépôt: 22.09.2011
(51) Int. Cl.: F16K 17/06, F16K 27/02, G05D 16/06, G05D 16/10

(54) **LIMITEUR DE PRESSION, EN PARTICULIER POUR INSTALLATION DOMESTIQUE DE DISTRIBUTION D'EAU**
DRUCKENTLASTUNGSVENTIL, IM BESONDEREN FÜR EINE HAUSHALTSWASSERVERTEILUNGSANLAGE
PRESSURE RELIEF VALVE, IN PARTICULAR FOR DOMESTIC WATER DISTRIBUTION EQUIPMENT

(30) Priorité: 22.09.2010 FR 1057619
(43) Date de publication de la demande: 31.07.2013
(73) Titulaire: Watts Industries France, 84270 Vedene (FR)
(72) Inventeur: MENET, Georges, F-73800 Les Marches (FR)
(74) Mandataire: Casalonga, Axel
(86) Numéro de dépôt international: PCT/EP2011/066491
(87) Numéro de publication internationale: WO 2012/038500

(56) Documents cités:
- DE-A1- 3 605 606
- DE-B- 1 067 386
- FR-A3- 2 668 238
- US-A- 5 586 569
- US-A1- 2009 145 495

## Description

La présente invention concerne le domaine des limiteurs de pression de fluide, et plus particulièrement les limiteurs de pression d'installations domestiques de distribution d'eau.

Dans de telles installations, il est souhaitable que l'eau arrivant en amont du limiteur de pression soit délivrée en aval de ce dernier sous une pression plus faible présentant une valeur maximum.

Un limiteur de pression connu comprend un corps présentant une partie centrale et, de part et d'autre de cette partie centrale, un embout amont et un embout aval. Dans la partie centrale sont aménagées une chambre amont et une chambre aval séparée par une cloison radiale dont l'axe est perpendiculaire à l'axe des embouts et présentant un passage de communication. Un piston traverse ce passage de la cloison radiale de la partie centrale du corps et porte d'une part un plateau soumis à la pression amont à l'encontre d'un ressort et un plateau apte à fermer le passage de communication lorsque la pression aval atteint une valeur maximum. Compte tenu de la complexité des écoulements de l'eau à assurer entre l'amont et l'aval, due au fait que les embouts amont et aval présentent aux orifices amont et aval, débouchant dans les chambres amont et aval, qui doivent nécessairement être radialement décalées, un tel limiteur de pression est volumineux, lourd, complexe à usiner et en conséquence relativement onéreux.

Par ailleurs, le document US 5 586 569 décrit un limiteur de pression dans lequel la chambre du corps comprend une paroi intérieure périphérique présentant, selon un axe principal, des surfaces intérieures substantiellement cylindriques entre lesquelles est aménagé un épaulement périphérique non radial orienté vers l'ouverture du corps et dans lequel la chemise présente un épaulement périphérique non radial aménagé entre des surfaces périphériques substantiellement cylindriques. Un joint d'étanchéité est interposé et écrasé entre lesdits épaulements, ce joint s'étendant dans un plan oblique.

Le document DE 36 05 606 décrit un limiteur de pression dans lequel la chambre du corps comprend une paroi intérieure périphérique substantiellement cylindrique et dans lequel la chemise présente des surfaces périphériques de diamètres différents, la surface périphérique de plus grand diamètre présentant une rainure périphérique oblique engagée dans la paroi intérieure cylindrique du corps et dans laquelle est inséré un joint d'étanchéité.

Le document DE 1 067 386 décrit un limiteur de pression dans lequel la chambre du corps comprend une paroi intérieure périphérique tronconique et la chemise présente une surface périphérique tronconique venant en contact étanche sur la surface périphérique tronconique du corps.

Le but de la présente invention est de proposer un limiteur de pression dont la structure peut permettre de réduire les inconvénients des limiteurs de pression de l'art antérieur.

Le limiteur de pression proposé comprend les caractéristiques de la revendication 1 et est destiné à être installé entre une conduite amont et une conduite aval d'écoulement d'un fluide, comprend un corps comprenant une partie centrale dans laquelle est aménagée une chambre présentant, selon un premier axe (Y), un fond et, entre ce fond et une ouverture, une paroi latérale périphérique et comprenant des embouts opposés de branchement amont et aval présentant, selon un second axe (X), des orifices cylindriques amont et aval débouchant dans la chambre au travers de la paroi latérale de cette dernière.

Le limiteur de pression proposé comprend une chemise installée dans la chambre et présentant un passage de communication apte à mettre en communication les orifices amont et aval.

Le limiteur de pression proposé comprend en outre un piston porté de façon coulissante par ladite chemise et comprenant une partie d'actionnement soumise à la pression aval à l'encontre d'un ressort de rappel et une partie d'obturation apte à fermer ledit passage de communication lorsque la pression aval atteint une pression limite maximum (Pmax).

La paroi latérale périphérique de la chambre comprend, depuis l'ouverture de cette dernière et selon ledit premier axe (Y), une zone périphérique et une partie tronconique de révolution au travers de laquelle lesdits orifices cylindriques amont et aval débouchent dans la chambre.

La chemise comprend une paroi radiale dont la périphérie est adjacente à ou en contact avec ladite zone périphérique de la paroi latérale périphérique de la chambre, une paroi cylindrique axiale s'étendant vers le fond de ladite chambre et présentant ledit passage de communication, et une paroi de séparation formée autour de cette paroi cylindrique axiale et disposée de façon oblique par rapport audit premier axe (Y).

La périphérie de la paroi de séparation est adjacente à ou en contact avec une zone de la partie tronconique de révolution de la paroi latérale périphérique de la chambre et s'étend ou passe entre les orifices amont et aval.

La périphérie de la paroi de séparation est munie d'un joint annulaire en appui contre ladite partie tronconique de révolution de la paroi latérale périphérique de la chambre.

L'angle d'ouverture de ladite partie tronconique de la paroi latérale de la chambre peut être compris entre 20 et 90 degrés, de préférence entre 35 et 45 degrés.

L'angle entre ledit second axe (X) et la paroi oblique de séparation (26) peut être compris entre 120 et 160 degrés, de préférence entre 145 et 155 degrés.

L'axe (X) des orifices amont et aval peut être oblique par rapport à l'axe (Y) de la chambre.

L'axe (X) des orifices amont et aval peut être perpendiculaire à l'axe (Y) de la chambre.

Le piston peut présenter une tige s'étendant axialement au travers de la paroi cylindrique axiale de la chemise et laissant un espace annulaire de communication de la paroi latérale périphérique de la chambre et présentant, aux extrémités de cette tige, un plateau d'actionnement ou une membrane d'actionnement soumis à la pression aval à l'encontre d'un ressort et un plateau d'obturation pouvant coopérer avec l'extrémité de ladite paroi cylindrique axiale de la chemise.

Un moyen d'indexation de la chemise par rapport au corps peut être avantageusement prévu, ce moyen d'indexation pouvant comprendre au moins une partie en saillie et une partie en creux, respectivement de la chemise et du corps, s'engageant l'une dans l'autre.

Des limiteurs de pression selon l'invention vont maintenant être décrits à titre d'exemples non limitatifs, illustrés par le dessin sur lequel :
- la figure 1 représente une coupe longitudinale d'un limiteur de pression, en position d'obturation ;
- la figure 2 représente une coupe longitudinale du limiteur de pression de la figure 1, en position d'ouverture ;
- la figure 3 représente une coupe transversale du limiteur de pression de la figure 1, en position d'ouverture ;
- la figure 4 représente une vue en bout du limiteur de pression de la figure 1, côté amont ;
- la figure 5 représente une vue en perspective d'une chemise du limiteur de pression de la figure 1 ;
- la figure 6 représente une coupe longitudinale d'un autre limiteur de pression ;
- la figure 7 représente une coupe longitudinale d'un autre limiteur de pression, en position ouverture ne formant pas partie de l'invention telle que renvediquée ; et
- la figure 8 représente une coupe longitudinale d'un autre limiteur de pression, en position d'ouverture.

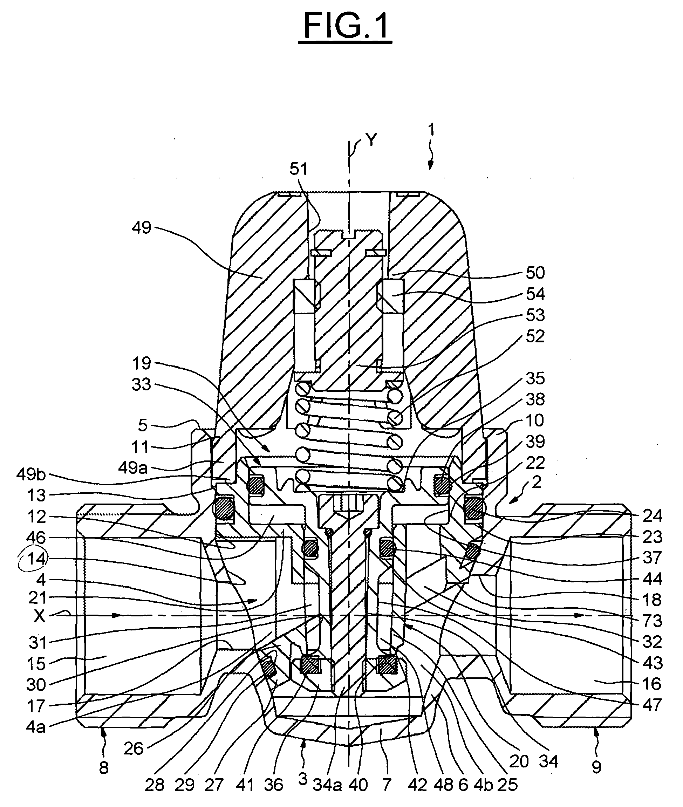

Un limiteur de pression 1 représenté sur les figures 1 à 5 comprend un corps 2 qui comprend une partie centrale 3 qui présente un premier axe Y, supposé vertical, et dans laquelle est aménagée une chambre 4 ouverte sur une face supérieure radiale 5 de cette partie centrale et présentant une paroi latérale 6 et un fond 7. Le corps 2 comprend en outre des embouts cylindriques de branchement opposés 8 et 9, amont et aval, situés de part et d'autre de la partie centrale 3 et rejoignant cette dernière, les embouts 8 et 9 étant établis coaxialement selon un second axe X perpendiculaire à l'axe Y, supposé horizontal, les axes X et Y se coupant. Le corps 2 peut être réalisé de façon à présenter un plan de symétrie contenant les axes X et Y.

La paroi latérale périphérique 6 de la chambre 4 présente intérieurement, à partir de son ouverture supérieure 10, une partie taraudée 11, une partie cylindrique lisse 12 de section plus petite que la partie taraudée et reliée à la partie taraudée par un chanfrein 13 et une partie tronconique de révolution 14, lisse, rejoignant le fond 7 et allant en se rétrécissant.

Les embouts amont et aval 8 et 9 présentent des passages axiaux cylindriques 15 et 16 qui se terminent, intérieurement, par des orifices cylindriques amont et aval 17 et 18 de diamètres réduits débouchant dans la chambre 4, approximativement au milieu de la hauteur de la partie tronconique 14 de la paroi périphérique 6 de la chambre 4.

Selon un exemple de réalisation, l'angle d'ouverture de la partie tronconique 14 de la paroi latérale 6 de la chambre 4 selon l'axe Y, c'est-à-dire l'angle entre deux génératrices opposées selon l'axe Y, peut être compris entre 20 et 90 degrés, de préférence entre 35 et 45 degrés. Sur le dessin, cet angle d'ouverture est égal à environ 40 degrés.

Le limiteur de pression 1 comprend en outre un mécanisme 19 installé dans la chambre 4.

Ce mécanisme 19 comprend une chemise fixe 20 qui comprend une paroi radiale 21 dont la périphérie 22 est adjacente ou en contact avec une zone périphérique de la partie cylindrique lisse 12 de la paroi latérale 6 de la chambre 4, cette paroi radiale 21 étant située du côté de l'ouverture 10 de la chambre 4 par rapport aux orifices amont et aval 17 et 18. La périphérie 22 de la paroi radiale 21 est munie, dans une gorge périphérique 23, d'un joint annulaire d'étanchéité 24 en appui contre la partie cylindrique lisse 12.

La chemise 20 comprend en outre une partie cylindrique 25 de section plus petite que la paroi radiale 21 et qui s'étend en direction du fond 7 de la chambre 4, sans l'atteindre.

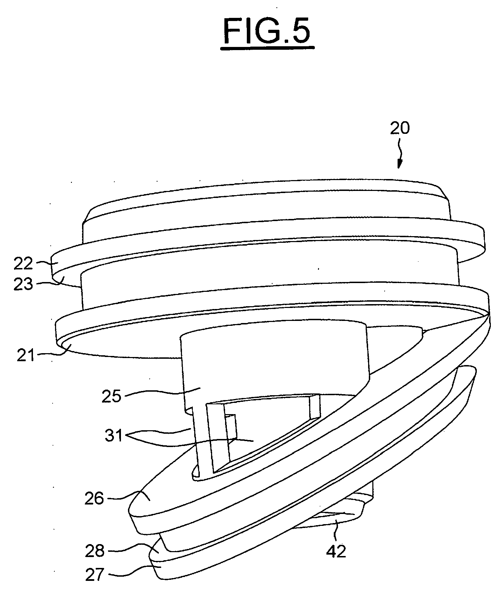

La chemise 20 (visible en perspective sur la figure 5) comprend en outre une paroi de séparation 26 qui s'étend autour de la partie cylindrique 25 et dont la périphérie 27 est adjacente ou en contact avec une zone périphérique de la partie tronconique 14 de la paroi latérale 6 de la chambre 4. La paroi de séparation 26 s'étend dans un plan oblique par rapport à l'axe X et donc par rapport à l'axe Y de la chambre 4, c'est-à-dire dans un plan non parallèle à l'axe X et non radial à l'axe Y de la chambre 4. La périphérie 27 de la paroi oblique de séparation 26 est munie, dans une gorge périphérique 28, d'un joint annulaire d'étanchéité 29 en appui contre la partie tronconique 14. Le joint 29 s'étend dans le même plan oblique par rapport à l'axe Y de la chambre 4 que la paroi oblique de séparation 26.

La paroi oblique de séparation 26 munie du joint 29 est disposée de telle sorte qu'elle passe entre les orifices amont et aval 17 et 18 pour déterminer, de part et d'autre, des espaces 4a et 4b communiquant respectivement avec les orifices amont et aval 17 et 18. La périphérie 27 de la paroi oblique de séparation 26, munie du joint 29, passe d'une part, du côté de l'orifice amont 17, entre l'orifice amont 17 et le fond 7 de la chambre 4 et d'autre part, du côté de l'orifice aval 18, entre la partie cylindrique lisse 12 de la paroi latérale 6 de la chambre 4 et l'orifice aval 18. Ainsi, comme la paroi oblique de séparation 26 munie du joint 29 est logée dans la partie tronconique 14 de la paroi latérale 6 de la chambre 4, la périphérie 27 de la paroi oblique de séparation 26 est elliptique.

La chemise 20 présente un passage axial traversant 30 qui s'étend axialement à la partie cylindrique 25 et débouche au-dessus de la paroi radiale 21, vers l'ouverture 10 de la chambre 4 et au-dessous de cette partie cylindrique 25 vers le fond 7.

La chemise 20 présente également un passage latéral 31, en deux parties (figure 5), qui traverse la partie cylindrique 25 et qui débouche d'une part dans le passage axial 30 et d'autre part entre la paroi radiale 21 et la paroi oblique de séparation 26, dans l'espace 4a, pour mettre en communication l'orifice amont 17 et le passage axial 30.

La chemise 20 présente également, à distance du passage axial 30 et parallèlement, un passage auxiliaire 32 qui traverse les parois 21 et 26 et qui débouche d'une part du côté du fond 7 de la chambre 4 et d'autre part au-dessus de la paroi radiale 21, pour mettre en communication l'orifice aval 18 et l'espace au-dessus de la paroi radiale 21.

La chemise est réalisée de façon à présenter un plan de symétrie passant par les axes X et Y.

Selon un exemple de réalisation, l'angle entre l'axe Y et la paroi oblique de séparation 26 dans le plan des axes X et Y, ouvert du côté de l'orifice amont 17, peut être compris entre 20 et 60 degrés, de préférence entre 25 et 35 degrés, cet angle étant égal à environ 30 degrés sur le dessin. Selon une autre expression correspondante, l'angle entre l'axe X et la paroi oblique de séparation 26 dans le plan des axes X et Y, ouvert du côté de l'orifice amont 17, peut être compris entre 120 et 160 degrés, de préférence entre 145 et 155 degrés, cet angle étant égal à environ 150 degrés sur le dessin.

Le mécanisme 19 comprend en outre un piston 33 qui comprend une tige 34 qui s'étend dans le passage axial 30 de la chemise 20 et, aux extrémités de cette tige 34, un grand plateau circulaire radial d'actionnement 35 qui est placé du côté de l'ouverture X de la chambre 4, au-dessus de la paroi radial 21, et un petit plateau radial circulaire d'obturation 36 qui est placé du côté du fond 7 de la chemise 4, au-dessous de la paroi oblique de séparation 26.

Le grand plateau radial 35 est placé dans un lamage cylindrique supérieur 37 de la paroi radiale 21 de la chemise 20 et présente, à sa périphérie, une gorge annulaire 38 dans laquelle est placé un joint torique d'étanchéité 39 en appui contre la paroi périphérique du lamage 37.

Le petit plateau radial 36 présente une rainure circulaire 40 dans laquelle est placé un joint annulaire d'étanchéité 41 situé en face de l'extrémité inférieure correspondante de la partie cylindrique 25 de la chemise 20, cette extrémité présentant une nervure annulaire 42 formant un siège d'appui pour le joint 41.

A proximité du grand plateau radial 35, la tige 34 présente une gorge périphérique 43 dans laquelle est placé un joint torique d'étanchéité 44 en contact serré avec la paroi du passage principal 30 de la chemise 20.

Selon un exemple de réalisation, la tige 34 et le grand plateau 35 peuvent être d'une seule pièce et le petit plateau 36 peut être rapporté et fixé grâce à une vis axiale 34a traversant la tige 34.

Le piston 33 est mobile selon l'axe Y entre une position de fermeture et une position d'ouverture totale.

Dans la position de fermeture (figure 1), le petit plateau radial 36 est rapproché de l'extrémité de la partie cylindrique 25 de la chemise 20, le joint annulaire 41 porté par ce petit plateau radial 36 étant en appui contre le siège 42 de l'extrémité de la partie cylindrique 25 de la chemise 20, et le grand plateau radial 35 est éloigné de la paroi radiale 21 de la chemise 20.

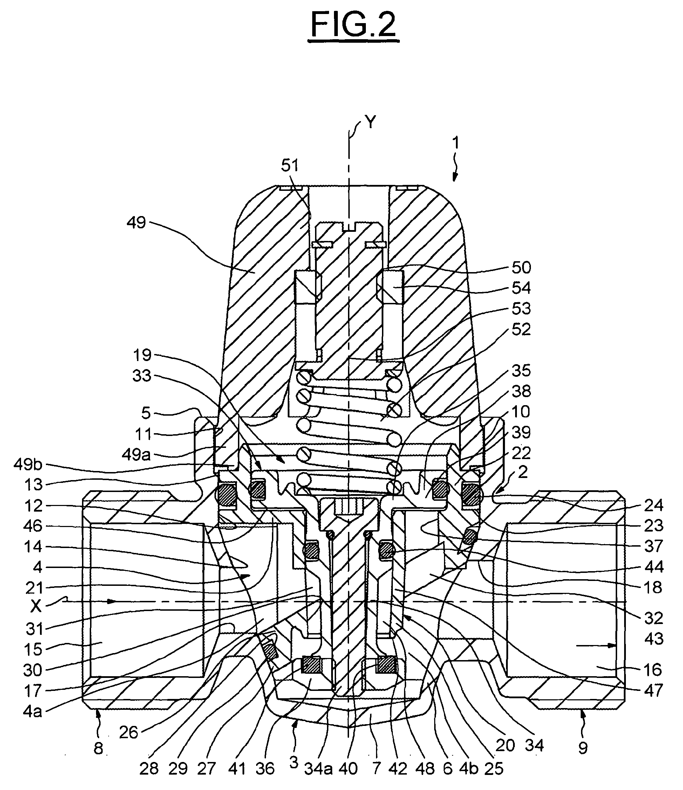

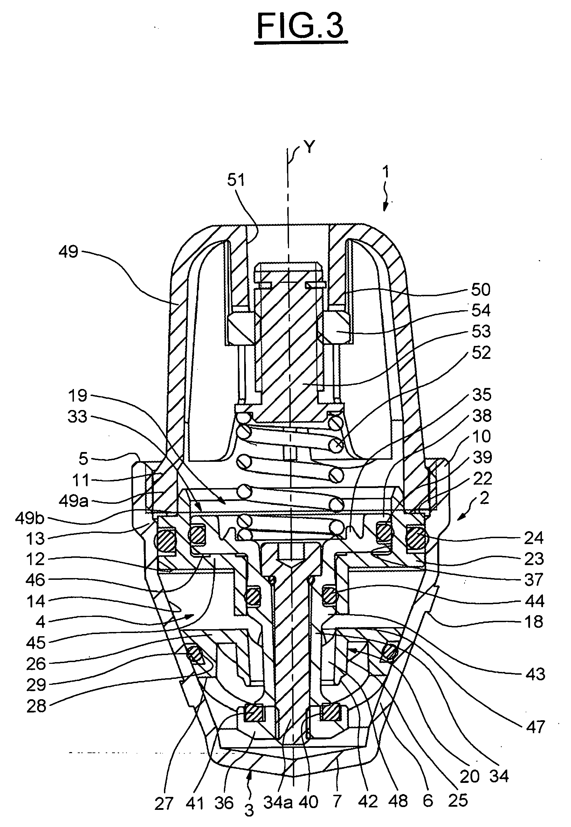

Dans la position d'ouverture totale (figures 2 et 3), le grand plateau radial 35 est rapproché de la paroi radiale 21 de la chemise 20 et est en appui contre des plots espacés en saillie 45 (figure 3) de cette paroi radiale 21 et le petit plateau radial 36 est éloigné de l'extrémité de la partie cylindrique 25 de la chemise 20, un espace existant entre le joint annulaire 41 porté par ce petit plateau radial 36 et le siège 42 de l'extrémité de la partie cylindrique 25 de la chemise 20. Grâce aux plots en saillie 45, le grand plateau radial 35 reste soumis sur quasiment toute sa surface à la pression aval.

Ainsi, dans le lamage cylindrique 37 de la paroi radiale 21 de la chemise 20 et entre cette paroi radiale 21 et le grand plateau 35 du piston 33, est formée une chambre auxiliaire 46 reliée à l'orifice aval 18 par le passage auxiliaire 32 de la chemise 20, la chambre auxiliaire 46 étant rendue étanche grâce aux joints d'étanchéité 39 et 44.

La tige 34 du piston 33 présente, du côté du petit plateau radial 36, une partie cylindrique rétrécie 47 laissant subsister un espace annulaire de communication 48 entre cette partie rétrécie 47 et la paroi du passage principal 30 de la chemise 20. Cet espace 48 communique avec l'orifice amont 17 par le passage latéral 31 de la partie cylindrique 25 de la chemise 20 et communique avec l'orifice aval 18, lorsque le piston 33 s'écarte de sa position fermée et s'ouvre, par l'espace créé entre le joint 41 et le siège 42.

Le limiteur de pression 1 comprend en outre un chapeau creux 49 dont le bord périphérique 49a présente un filetage vissé dans la partie taraudée 11 de la chambre 4 du corps 2 et dont le bord d'extrémité 49b appuie axialement sur la périphérie 22 de la paroi radiale 21 de la chemise 20 de façon à appliquer axialement le joint 29 et la périphérique 27 de la paroi oblique de séparation 26 de la chemise 20 contre la partie tronconique 14 de la paroi de la chambre 4 du corps 2, permettant ainsi de maintenir la chemise 20 en exerçant un effort vers le fond 7 de la chambre 4. Cette application est immédiate par le simple fait d'une conjonction de la forme elliptique de la paroi oblique de séparation 26 et de la forme conique de la partie tronconique 14.

Au travers du fond 50 du chapeau creux 49 est aménagé un trou axial traversant 51.

Le mécanisme 19 comprend en outre un ressort hélicoïdal de rappel 52 placé axialement entre le grand plateau radial 35 du piston 33 et une vis axiale de réglage 53 engagée dans le trou traversant 51 du chapeau 49 et vissée dans une rondelle 54 en appui contre une partie interne en saillie du chapeau 49. Le ressort de rappel 52 agit sur le piston 33 vers sa position d'ouverture totale précitée.

Le limiteur de pression 1 peut fonctionner de la manière suivante.

L'embout 8 présentant l'orifice amont 17 peut être relié à une source (non représentée) d'un fluide sous pression, établie à une pression amont haute Ph, et l'embout 9 présentant l'orifice aval 18 est relié à un organe de distribution tel qu'un robinet (non représenté), établissant une pression aval Pa variable.

La pression aval Pa variable est établie dans la chambre auxiliaire 46 du mécanisme 19 via le passage auxiliaire 32 et sollicite vers le haut le grand plateau radial 35 du piston 33 en opposition au ressort de rappel 52.

Lorsque la pression aval Pa atteint une pression limite maximum Pmax inférieure à la pression amont haute Ph, le piston 33 atteint sa position de fermeture, en comprimant le ressort de rappel 52. Le fluide est empêché de passer depuis l'orifice amont 17 vers l'orifice aval 18 par le fait que le joint 41 porté par le petit plateau radial 36 du piston 33 est en appui sur le siège 42 de l'extrémité de la partie cylindrique 25 de la chemise 20.

Lorsque la pression aval Pa est au-dessous de la pression limite maximum Pmax, le piston 33 se déplace vers sa position d'ouverture, le joint 41 porté par le petit plateau radial 36 du piston 33 est éloigné du siège 42 de l'extrémité de la partie cylindrique 25 de la chemise 20 et le fluide s'écoule de l'orifice amont 17 vers l'orifice aval 18 en passant au travers du passage latéral 31 de la chemise 4, de l'espace annulaire 48 aménagé entre la paroi du passage principal 30 de la chemise 20 et la partie cylindrique rétrécie 47 de la tige 34 du piston 33 et entre le joint 41 porté par le petit plateau radial 36 du piston 33 et le siège 42 de l'extrémité de la partie cylindrique 25 de la chemise 20.

Ainsi, la pression aval ne peut pas être supérieure à la pression limite maximum Pmax.

En déplaçant axialement la vis de réglage 53, on peut régler la compression du ressort de rappel 52 et ainsi régler la valeur de la pression limite maximum Pmax.

On peut observer que la pression amont haute Ph du fluide, qui dans certains cas peut être élevée, sollicite la paroi oblique de séparation 26 de la chemise 20 vers le fond 7 de la chambre 4. Ainsi, la périphérie de la paroi oblique de séparation 26 et son joint 29 sont, sous l'effet de la pression amont, sollicités vers la partie tronconique 14 de la chambre 4 pour éviter des fuites entre l'amont et l'aval, qui pourraient être dues à une déformation de la paroi oblique de séparation 26.

Par ailleurs, l'existence de la partie tronconique 14 de la chambre 4 permet un montage facile de la chemise 20 car la périphérie de la paroi oblique de séparation 26 et son joint 29 viennent directement en appui sur la partie tronconique 14 de la chambre 4.

En outre, du fait de l'inclinaison de la paroi oblique de séparation 26, le limiteur de pression 1 peut être compact et de fabrication et de montage aisés. En effet, dans la zone située du côté de l'orifice aval 18, les joints 24 et 29 peuvent être situés l'un à proximité de l'autre, les périphéries 22 et 27 de la paroi radiale 21 et de la paroi oblique de séparation 26 se rejoignant dans cette zone. En outre, Les usinages à effectuer sur et/ou dans les embouts 8 et 9 peuvent être coaxiaux selon l'axe X et les usinages à réaliser dans la chambre 4 peuvent être coaxiaux selon l'axe Y et perpendiculaires à ceux des embouts.

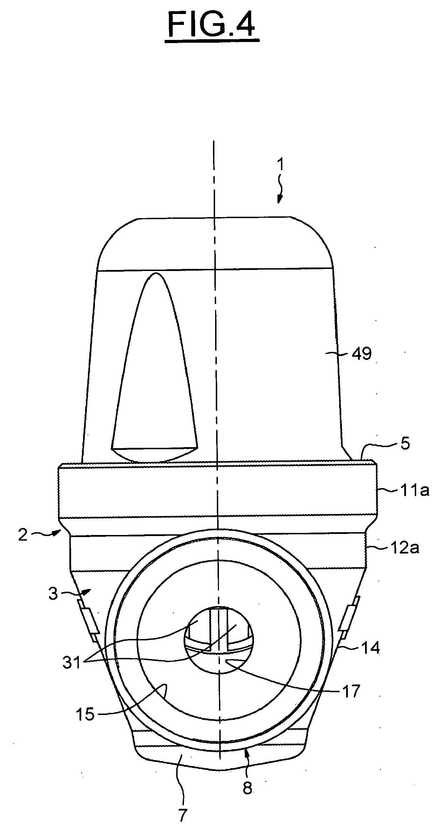

La paroi latérale périphérique 6 de la chambre 4 peut présenter une épaisseur sensiblement constante, de telle sorte que (figure 4) sa face extérieure présente des parties cylindriques 11a et 12a correspondant aux parties 11 et 12 et une partie tronconique 14a correspondant à la partie tronconique 14. La chemise 20 peut être en une matière plastique moulée. Le piston peut aussi être en une matière plastique moulée et/ou métallique.

Néanmoins, selon une variante de réalisation, les axes X et Y pourraient ne pas être perpendiculaires, l'axe Y pouvant être incliné du côté de l'orifice amont 17.

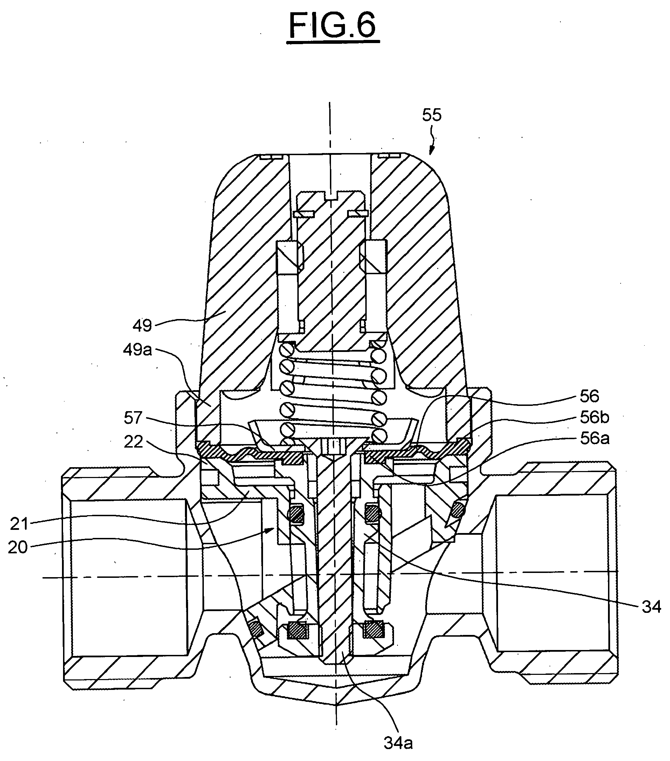

Selon une variante de réalisation représentée sur la figure 6, un limiteur de pression 55 peut se différencier du limiteur de pression 1 uniquement par le fait que le grand plateau 25 du piston 33 est remplacé par une membrane souple annulaire 56 dont le bord intérieur 56a est pris de façon étanche entre l'extrémité supérieure de la tige 34 et une rondelle 57 tenue par la tête de la vis 34a sur la tige 34 et dont le bord périphérique 56b est pris de façon étanche entre la périphérie 22 de la paroi radiale 21 de la chemise 20, et le bord périphérique 49a du chapeau 49.

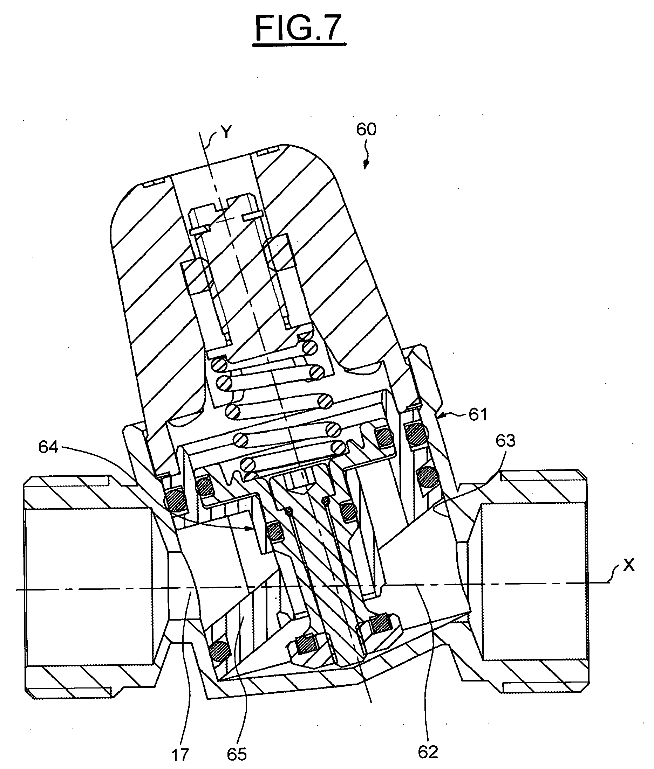

Selon une autre réalisation représentée sur la figure 7 ne formant pas partie de l'invention telle que revendiquée, un limiteur de pression 60 peut se différencier du limiteur de pression 1 uniquement par les dispositions suivantes.

Le corps 61 du limiteur de pression 60 présente une chambre 62 dont la paroi 63 est, cette fois, cylindrique et dans laquelle est disposée une chemise 64 dont la paroi oblique de séparation 65 épouse cette paroi cylindrique 63.

Les axes X et Y du limiteur de pression 60 ne sont pas perpendiculaires, l'axe Y étant incliné du côté de l'orifice amont 17 de façon à accroître l'angle de la paroi de séparation 65 par rapport à l'axe X. Dans une variante de réalisation, la paroi oblique de séparation pourrait être disposée radialement à l'axe Y.

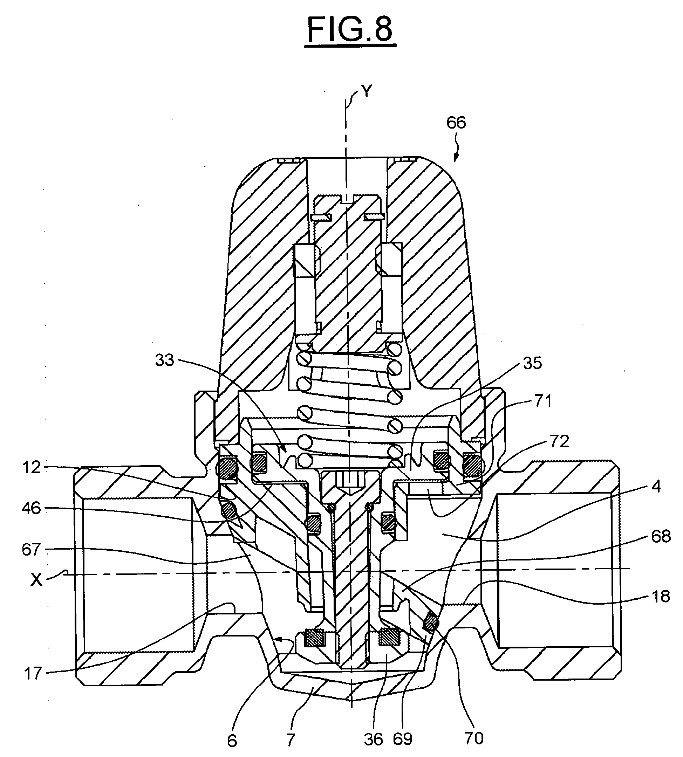

Selon une autre réalisation représentée sur la figure 8, un limiteur de pression 66 peut se différencier du limiteur de pression 1 uniquement par les dispositions suivantes.

Ce limiteur de pression 66 comprend une chemise fixe 67 dont la paroi oblique de séparation 68 qui, par rapport à la paroi oblique de séparation 26 de la chemise fixe 20, est disposée de façon inversée, c'est-à-dire qu'elle est pivotée de 180 degrés autour de l'axe Y.

Ainsi, la périphérie 69 de la paroi oblique de séparation 68, munie d'un joint 70, passe d'une part, du côté de l'orifice aval 18, entre
l'orifice aval 18 et le fond 7 de la chambre 4 et d'autre part, du côté de l'orifice amont 17, entre la partie cylindrique lisse 12 de la paroi latérale 6 de la chambre 4 et l'orifice amont 17.

Le petit plateau d'obturation 36 du piston 33 est placé du côté amont et, en remplacement du passage auxiliaire 32 de la chemise 20, la paroi radiale 71 de la chemise 67 présente un passage auxiliaire 72 mettant en communication l'orifice aval 18 et la chambre auxiliaire 46 associée au grand plateau d'actionnement 35 du piston 33.

Par ailleurs, afin de faciliter le montage de la chemise 20 ou de la chemise 67 dans la chambre 4 du corps 2, ou de la chemise 64 dans la chambre 62 du corps 61, il peut être avantageux de prévoir un moyen d'indexation en rotation selon l'axe Y. Ce moyen d'indexation peut comprendre au moins une partie en saillie et une partie en creux, respectivement de la chemise et du corps, s'engageant l'une dans l'autre, et pouvant former en outre un détrompeur.

Par exemple, dans le cas des limiteurs de pression 1 des figures 1 à 6, l'orifice aval 18 peut être plus grand que l'orifice amont 17 et la paroi de séparation 26 peut présenter des ergots 73 (figure 1) s'engageant dans l'orifice aval 18 pour obtenir un montage correct, tandis que ces ergots butent contre la paroi tronconique 14 en cas de montage incorrect de telle sorte que la chemise 20 ne peut atteindre sa position correcte.

La présente invention ne se limite pas aux exemples ci-dessus décrits. Des combinaisons différentes des dispositions proposées pourraient être envisagées. Bien d'autres variantes de réalisation sont possibles, sans sortir du cadre défini par les revendications annexées.

## Revendications

1. Limiteur de pression destiné à être installé entre une conduite amont et une conduite aval d'écoulement d'un fluide, comprenant :
un corps (2) comprenant une partie centrale (3) dans laquelle est aménagée une chambre (4) présentant, selon un premier axe (Y), un fond (7) et, entre ce fond (7) et une ouverture (10), une paroi latérale périphérique (6) et comprenant des embouts opposés de branchement amont et aval (8, 9) présentant, selon un second axe (X), des orifices cylindriques amont et aval (17, 18) débouchant dans la chambre (4) au travers de la paroi latérale (6) de cette dernière ;
une chemise (20) installée dans la chambre (4), comprenant une paroi de séparation (26) dont la périphérie (27) est adjacente à ou en contact avec une zone périphérique de la paroi latérale périphérique (6) de la chambre (4) et s'étendant entre les orifices amont et aval (17, 18), la chemise présentant un passage de communication (31) traversant la paroi de séparation (26), apte à mettre en communication les orifices amont et aval (17, 18) ;
et un piston (33) porté de façon coulissante par ladite chemise (20) et comprenant une partie d'actionnement (35) soumise à la pression aval à l'encontre d'un ressort de rappel (52) et une partie d'obturation (36) apte à fermer ledit passage de communication (31) lorsque la pression aval atteint une pression limite maximum (Pmax) ;
la paroi de séparation (26) étant disposée de façon oblique par rapport audit premier axe (Y) de la paroi latérale périphérique (6) de la chambre (4) ;
**caractérisé en ce que** la paroi latérale périphérique (6) de la chambre (4) comprend une partie tronconique de révolution (14) selon ledit premier axe (Y), ouverte du côté de l'ouverture (10) de ladite chambre (4) et présentant ladite zone périphérique adjacente à ou en contact avec la périphérie (27) de la paroi de séparation (26) de la chemise (20), lesdits orifices cylindriques amont et aval (17, 18) débouchent dans la chambre (4) au travers de ladite partie tronconique de révolution (14) et la périphérie (27) de la paroi de séparation (26) est munie d'un joint annulaire (29) en appui contre ladite partie tronconique de révolution (14), la chemise (20) comprend une paroi radiale (21) située du côté de l'ouverture (10) de la chambre (4) par rapport aux orifices amont et aval (17, 18) et dont la périphérie (22) est adjacente ou en contact avec une partie cylindrique (12) de la chambre (4), et les périphéries (22) et (27) de la paroi radiale (21) et de la paroi oblique de séparation (26) se rejoignent dans une zone située du côté de l'orifice aval (18) ou de l'orifice amont (17).

2. Limiteur de pression selon la revendication 1, dans lequel l'angle d'ouverture de ladite partie tronconique (14) de la paroi latérale (6) de la chambre (4) est compris entre 20 et 90 degrés, de préférence entre 35 et 45 degrés.

3. Limiteur de pression selon l'une quelconque des revendications précédentes, dans lequel l'angle entre ledit second axe (X) et la paroi oblique de séparation (26) est compris entre 120 et 160 degrés, de préférence entre 145 et 155 degrés.

4. Limiteur de pression selon l'une quelconque des revendications précédentes, dans lequel l'axe (X) des orifices amont et aval (17, 18) est oblique par rapport à l'axe (Y) de la chambre (4).

5. Limiteur de pression selon l'une quelconque des revendications 1 à 4, dans lequel l'axe (X) des orifices amont et aval (17, 18) est perpendiculaire à l'axe (Y) de la chambre (4).

6. Limiteur de pression selon l'une quelconque des revendications précédentes, dans lequel la périphérie (22) de la paroi radiale (21) étant munie d'un joint annulaire (24) en appui contre la paroi latérale (6) de la chambre (4), ce joint s'étendant dans un plan radial.

7. Limiteur de pression selon la revendication 6, dans lequel la paroi radiale (21) et la paroi de séparation (26) sont reliées par une paroi cylindrique axiale (25) présentant le passage de communication (31), le piston présentant une tige (34) s'étendant axialement dans cette paroi cylindrique axiale (25) et laissant un espace annulaire de communication (48) et présentant, aux extrémités de cette tige, un plateau d'actionnement (35) ou une membrane d'actionnement (56) soumis à la pression aval à l'encontre d'un ressort (52) et un plateau d'obturation du passage de communication (30, 48).

8. Limiteur de pression selon l'une quelconque des revendications précédentes, comprenant un moyen d'indexation de la chemise par rapport au corps.

9. Limiteur de pression selon la revendication 8, dans lequel le moyen d'indexation comprend au moins une partie en saillie et une partie en creux, respectivement de la chemise et du corps, s'engageant l'une dans l'autre.

## Patentansprüche

1. Druckbegrenzer, der dazu bestimmt ist, zwischen einer stromaufwärtigen Leitung und einer stromabwärtigen Abflussleitung eines Fluids eingebaut zu werden, der enthält:
einen Körper (2), der einen zentralen Teil (3) enthält, in dem eine Kammer (4) eingerichtet ist, die gemäß einer ersten Achse (Y) einen Boden (7) und zwischen diesem Boden (7) und einer Öffnung (10) eine seitliche Umfangswand (6) aufweist, und gegenüberliegende Aufsätze für den stromaufwärtigen und stromabwärtigen Anschluss (8, 9) enthält, die gemäß einer zweiten Achse (X) stromaufwärtige und stromabwärtige zylindrische Öffnungen (17, 18) aufweisen, die in die Kammer (4) durch deren Seitenwand (6) münden;
eine in die Kammer (4) eingebaute Laufbuchse (20), die eine Trennwand (26) enthält, deren Umfang (27) einer Umfangszone der seitlichen Umfangswand (6) der Kammer (4) benachbart oder mit dieser in Kontakt ist und sich zwischen den stromaufwärtigen und stromabwärtigen Öffnungen (17, 18) erstreckt, wobei die Laufbuchse einen die Trennwand (26) durchquerenden Verbindungsdurchgang (31) aufweist, der die stromaufwärtigen und stromabwärtigen Öffnungen (17, 18) in Verbindung setzen kann;
und einen Kolben (33), der von der Laufbuchse (20) gleitend getragen wird und einen Betätigungsteil (35), der dem stromabwärtigen Druck gegen die Kraft einer Rückholfeder (52) ausgesetzt ist, und einen Verschlussteil (36) enthält, der den Verbindungsdurchgang (31) schließen kann, wenn der stromabwärtige Druck einen maximalen Grenzdruck (Pmax) erreicht;
wobei die Trennwand (26) bezüglich der ersten Achse (Y) der seitlichen Umfangswand (6) der Kammer (4) schräg angeordnet ist;
**dadurch gekennzeichnet, dass** die seitliche Umfangswand (6) der Kammer (4) einen gemäß der ersten Achse (Y) drehsymmetrischen kegelstumpfförmigen Teil (14) enthält, der zur Seite der Öffnung (10) der Kammer (4) offen ist und die Umfangszone aufweist, die dem Umfang (27) der Trennwand (26) der Laufbuchse (20) benachbart oder mit ihm in Kontakt ist, wobei die stromaufwärtigen und stromabwärtigen zylindrischen Öffnungen (17, 18) durch den drehsymmetrischen kegelstumpfförmigen Teil (14) in die Kammer (4) münden, und der Umfang (27) der Trennwand (26) mit einer Ringdichtung (29) versehen ist, die gegen den drehsymmetrischen kegelstumpfförmigen Teil (14) anliegt, die Laufbuchse (20) eine radiale Wand (21) enthält, die sich auf der Seite der Öffnung (10) der Kammer (4) bezüglich der stromaufwärtigen und stromabwärtigen Öffnungen (17, 18) befindet und deren Umfang (22) einem zylindrischen Teil (12) der Kammer (4) benachbart oder damit in Kontakt ist, und die Umfänge (22) und (27) der radialen Wand (21) und der schrägen Trennwand (26) sich in einer Zone vereinen, die sich auf der Seite der stromabwärtigen Öffnung (18) oder der stromaufwärtigen Öffnung (17) befindet.

2. Druckbegrenzer nach Anspruch 1, wobei der Öffnungswinkel des kegelstumpfförmigen Teils (14) der Seitenwand (6) der Kammer (4) zwischen 20 und 90 Grad, vorzugsweise zwischen 35 und 45 Grad liegt.

3. Druckbegrenzer nach einem der vorhergehenden Ansprüche, wobei der Winkel zwischen der zweiten Achse (X) und der schrägen Trennwand (26) zwischen 120 und 160 Grad, vorzugsweise zwischen 145 und 155 Grad liegt.

4. Druckbegrenzer nach einem der vorhergehenden Ansprüche, wobei die Achse (X) der stromaufwärtigen und stromabwärtigen Öffnungen (17, 18) bezüglich der Achse (Y) der Kammer (4) schräg ist.

5. Druckbegrenzer nach einem der Ansprüche 1 à 4, wobei die Achse (X) der stromaufwärtigen und stromabwärtigen Öffnungen (17, 18) lotrecht zur Achse (Y) der Kammer (4) ist.

6. Druckbegrenzer nach einem der vorhergehenden Ansprüche, wobei, da der Umfang (22) der radialen Wand (21) mit einer Ringdichtung (24) in Auflage gegen die Seitenwand (6) der Kammer (4) versehen ist, diese Dichtung sich in einer radialen Ebene erstreckt.

7. Druckbegrenzer nach Anspruch 6, wobei die radiale Wand (21) und die Trennwand (26) durch eine axiale zylindrische Wand (25) verbunden sind, die den Verbindungsdurchgang (31) aufweist, wobei der Kolben eine Stange (34) aufweist, die sich axial in dieser axialen zylindrischen Wand (25) erstreckt und einen Verbindungsringraum (48) frei lässt, und an den Enden dieser Stange eine Betätigungsplatte (35) oder eine Betätigungsmembran (56), die dem stromabwärtigen Druck gegen die Kraft einer Feder (52) unterworfen ist, und eine Verschlussplatte des Verbindungsdurchgangs (30, 48) aufweist.

8. Druckbegrenzer nach einem der vorhergehenden Ansprüche, der eine Indexiereinrichtung der Laufbuchse bezüglich des Körpers enthält.

9. Druckbegrenzer nach Anspruch 8, wobei die Indexiereinrichtung mindestens einen vorstehenden und einen vertieften Teil der Laufbuchse bzw. des Körpers enthält, die sich ineinanderfügen.

## Claims

1. Pressure relief valve intended to be installed between an upstream pipe and a downstream pipe for the flow of a fluid, comprising:
a body (2) comprising a central portion (3) in which there is formed a chamber (4) having, along a first axis (Y), a bottom (7) and, between this bottom (7) and an opening (10), a peripheral side wall (6) and comprising opposite upstream and downstream connection end fittings (8, 9) having, along a second axis (X), upstream and downstream cylindrical orifices (17, 18) opening into the chamber (4) through the side wall (6) of the latter;
a sleeve (20) installed in the chamber (4), comprising a separation wall (26) whose periphery (27) is adjacent to or in contact with a peripheral region of the peripheral side wall (6) of the chamber (4) and extending between the upstream and downstream orifices (17, 18), the sleeve having a communication passage (31) passing through the separation wall (26) and able to establish communication between the upstream and downstream orifices (17, 18);
and a piston (33) borne in a sliding manner by the said sleeve (20) and comprising an actuating portion (35) subjected to the downstream pressure against the action of a return spring (52) and a closure portion (36) able to close the said communication passage (31) when the downstream pressure reaches a maximum limit pressure (Pmax);
the separation wall (26) being arranged obliquely with respect to the said first axis (Y) of the peripheral side wall (6) of the chamber (4);
**characterized in that**
the peripheral side wall (6) of the chamber (4) comprises an axisymmetric frustoconical portion (14) along the said first axis (Y), which is open on the side where the opening (10) of the said chamber (4) is located and has the said peripheral region adjacent to or in contact with the periphery (27) of the separation wall (26) of the sleeve (20), the said upstream and downstream cylindrical orifices (17, 18) open into the chamber (4) through the said axisymmetric frustoconical portion (14) and the periphery (27) of the separation wall (26) is provided with an annular seal (29) bearing against the said axisymmetric frustoconical portion (14), the sleeve (20) comprises a radial wall (21) situated on the side where the opening (10) of the chamber (4) is located with respect to the upstream and downstream orifices (17, 18) and whose periphery (22) is adjacent to or in contact with a cylindrical portion (12) of the chamber (4), and the peripheries (22) and (27) of the radial wall (21) and of the oblique separation wall (26) join up in a region situated on the side where the downstream orifice (18) or the upstream orifice (17) is located.

2. Pressure relief valve according to Claim 1, in which the opening angle of the said frustoconical portion (14) of the side wall (6) of the chamber (4) is between 20 and 90°, preferably between 35 and 45°.

3. Pressure relief valve according to either one of the preceding claims, in which the angle between the said second axis (X) and the oblique separation wall (26) is between 120 and 160°, preferably between 145 and 155°.

4. Pressure relief valve according to any one of the preceding claims, in which the axis (X) of the upstream and downstream orifices (17, 18) is oblique with respect to the axis (Y) of the chamber (4).

5. Pressure relief valve according to any one of Claims 1 to 4, in which the axis (X) of the upstream and downstream orifices (17, 18) is perpendicular to the axis (Y) of the chamber (4).

6. Pressure relief valve according to any one of the preceding claims, in which the periphery (22) of the radial wall (21) is provided with an annular seal (24) bearing against the side wall (6) of the chamber (4), this seal extending in a radial plane.

7. Pressure relief valve according to Claim 6, in which the radial wall (21) and the separation wall (26) are connected by an axial cylindrical wall (25) having the communication passage (31), the piston having a rod (34) extending axially in this axial cylindrical wall (25) and leaving an annular communication space (48) and having, at the ends of this rod, an actuating plate (35) or an actuating diaphragm (56) subjected to the downstream pressure against the action of a spring (52) and a plate for closing off the communication passage (30, 48).

8. Pressure relief valve according to any one of the preceding claims, comprising a means for indexing the sleeve with respect to the body.

9. Pressure relief valve according to Claim 8, in which the indexing means comprises at least one projecting portion and one recessed portion, respectively belonging to the sleeve and the body, engaging in one another.
